# EUROPEAN PATENT SPECIFICATION

(11) **EP 1 626 599 B1**
(45) Date of publication and mention of the grant of the patent: **01.08.2012**
(21) Application number: 04733759.7
(22) Date of filing: 19.05.2004
(51) Int. Cl.: H04W 48/20

(54) **A METHOD FOR ESTABLISHING A SERVICE CONNECTION**
VERFAHREN ZUR HERSTELLUNG EINER DIENSTVERBINDUNG
PROCEDE PERMETTANT D'ETABLIR UNE CONNEXION DE SERVICE

(30) Priority: 19.05.2003 CN 03136083
(43) Date of publication of application: 15.02.2006
(73) Proprietor: Huawei Technologies Co., Ltd., Shenzhen, Guangdong Province 518129 (CN)
(72) Inventor: XU, Bing, Huawei Administration Building, Shenzhen, Guangdong 518129 (CN); SHI, Jinhui, Huawei Administration Building, Shenzhen, Guangdong 518129 (CN)
(74) Representative: Isarpatent
(86) International application number: PCT/CN2004/000510
(87) International publication number: WO 2004/103004

(56) References cited:
- WO-A-00/16581
- WO-A2-98/23122
- CN-A- 1 265 254
- CN-A- 1 302 515
- US-A1- 2002 107 025
- US-A1- 2003 040 313
- US-A1- 2003 040 313

## Description

### Field of the Technology

The present invention relates generally to mobile communication technique field, more particularly to a method for establishing a service connection between user equipments and networks.

### Background of the Invention

With the development of wireless technique, various wireless access techniques have emerged, accordingly there are wireless networks adopting different techniques, like Global System for Mobile Communication (GSM) network and Code Division Multiple Access (CDMA) network in the second generation mobile communication, Wide Code Division Multiple Access (WCDMA) network and CDMA2000 network in the third generation mobile communication. As a result, User Equipment (UE), including single mode user equipment and multi mode user equipment, will need to select a network to reside in a proper cell after powered on, and detect the system messages and paging messages of this cell when in the idle state so as to initiate certain service requests to the network or receive service requests of other UEs.

At present, after UE is power-on, it will select a proper PLMN (Public Land Mobile Network) according to a PLMN list which is self-maintained and available, reside accordingly in a proper cell of this PLMN and register location area information. After residing in a proper cell, when in the idle state, UE will periodically initiate cell reselection according to detected signals of other cells to reside in a more proper cell. Of course, it is possible that UE may reselect a more proper PLMN to reside. In the process of PLMN selection/reselection and cell selection/reselection, UE always selects a cell with the best signal to reside. The above-mentioned UE comprises single mode UE and multi mode UE.

In addition, a preferable network can be set in UE, for instance, if double-mode UE corresponding to GSM/WCDMA sets the WCDMA network as preferable, while there are both GSM network and WCDMA network, this UE will first select a cell in WCDMA network to reside.

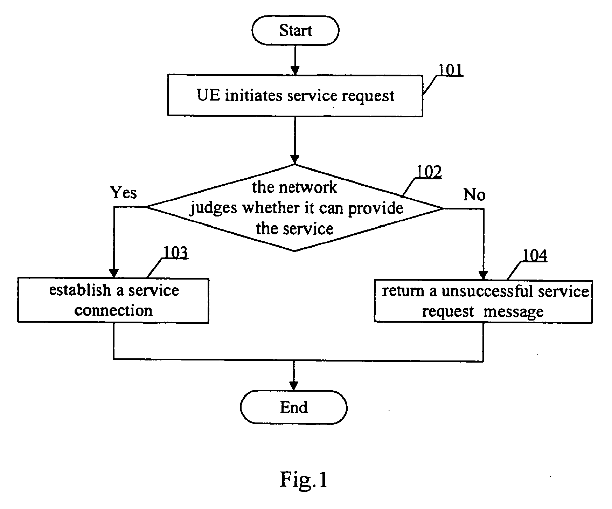

Figure 1 is a schematic diagram illustrating the service access procedure in the prior art, as shown in Figure 1, the service access procedure when UE initiates a service request to the network comprises the following steps:
Step 101∼step 102: UE initiates a service request to the network, after receiving the service request, the network judges whether it is able to provide the service that UE requests, if yes, execute step 103; otherwise, execute step 104.
Step 103: the network establishes a service connection with UE and provides UE with the service that UE requests.
Step 104: the network returns a unsuccessful service request response to UE, and rejects to provide the service that UE requests. After receiving the unsuccessful service request response, UE can notify the subscriber through an interface that the service connection is unsuccessful.

It can be seen from the above process that, after UE selects a cell with the best signal to reside, UE will send a service request to the network in the cell where it has resided when desiring a service connection. If the network which this cell belongs to cannot provide the service that UE requests, the network will reject UE's request for the service, even if this UE has actually subscribed to this service. As a result, service access probability is reduced and subscribers are not satisfied. The said service access probability is a comprehensive parameter taking into account the access probabilities of all services available in the cell, namely comprehensive access probability of all services available in the cell. Therefore, the above-described service refers to all services that a cell can provide.

WO 98/23122 A2 relates to inter-exchange hand-off of mobile station call communication by taking into account the service capabilities of candidate cells. In D1, a message is sent from a first exchange to a second exchange distributing information on the service capabilities supported by a cell serviced by that first exchange. This information on the service capabilities is then evaluated by the appropriate exchange in making determination as to which cooperating exchanges should be asked to make verification signal strength measurements prior to hand-off, and also as to which candidate cell serviced by another exchange may comprise a target cell for that hand-off.

WO 00/16581 A provides a method and arrangement in which the use of communication resources to find a new suitable cell is more efficient than in prior-art methods and arrangements. An essential idea in D2 is that the serving base station sends to mobile station the information about whether the base station in a neighbour cell peovides a given service. The cell reselection is then preferably performed directly at the level of the determined service.

US 2003/040313 A1 provide location area update procedures for mobile terminals where appropriate while at the same time minimizing the amount of location area update signaling required. In D3, a mobile terminal determines whether to perform a location area update procedure by consulting a forbidden list which includes one or more geographic coverage areas from which the mobile terminal may not obtain service. If the forbidden list indicates that a new geographic coverage area should not be selected, the mobile terminal does not perform a location area update request for that new coverage area.

US 2002/107025 A1 provides a system and method for allocating network resources in a cellular telecommunications network by considering each particular cell's capability to provide a requested service. In D4, the network determines each cell's capability to provide the requested service, and a cell list is constructed for any purpose in the network anytime.

### Summary of the Invention

Therefore, object of the present invention is to provide a method for establishing a service connection so as to greatly increase service access probability and improve service quality.

To realize the above object, the present invention provides a method for establishing a service connection between a User Equipment, UE, and a network, said method comprising:
receiving by a UE, a service request from a subscriber in a current cell where the UE resides;
determining and selecting by the UE, a cell that covers the current area where the UE resides and that is able to provide the service requested by the subscriber before sending the service request to the network by determining whether the current cell is able to provide the service requested according to the cell capability information provided by the current cell; if yes, selecting the current cell; otherwise, selecting another cell that covers the current area and that is able to provide the service requested according to the cell capability information provided by the other cell;;
initiating by the UE, the service request to the network in the selected cell;
establishing a service connection with the UE by the network.

Selecting another cell that covers the current area and is able to provide the service comprises:
searching for, by the UE, other cells that cover the current area;
residing, by the UE, in a found cell that is able to provide the service with the signal of best quality if determining that the found cell is able to provide the service according to the cell capability information provided by the found cell.

According to the method provided by the present invention, UE initiates a cell selection/reselection according to the requested service so as to select a proper cell to reside before sending a service request to the network. In this way, service connection-on probability and service quality are greatly improved, subscribers' demand for services is satisfied and service extension and application is promoted.

According to this invention, a mechanism of triggering cell selection/reselection by UE based on a requested service is provided. In practical applications, it is possible to combine this mechanism with the cell selection/reselection mechanism in the prior art to obtain an optimized mechanism for cell selection/reselection .

### Brief Description of the Drawings

Figure 1 is a schematic diagram illustrating the service access procedure in prior art;
Figure 2 is a schematic diagram illustrating the service access procedure in accordance with the present invention.

### Embodiments of the Invention

The present invention will be described in detail hereinafter with reference to the accompanying drawings.

In the present invention, the user equipment selects/reselects a cell according to the requested service, and sends a service request to the network after selecting a proper cell to reside. In this way, service access probability is greatly increased and service quality improved.

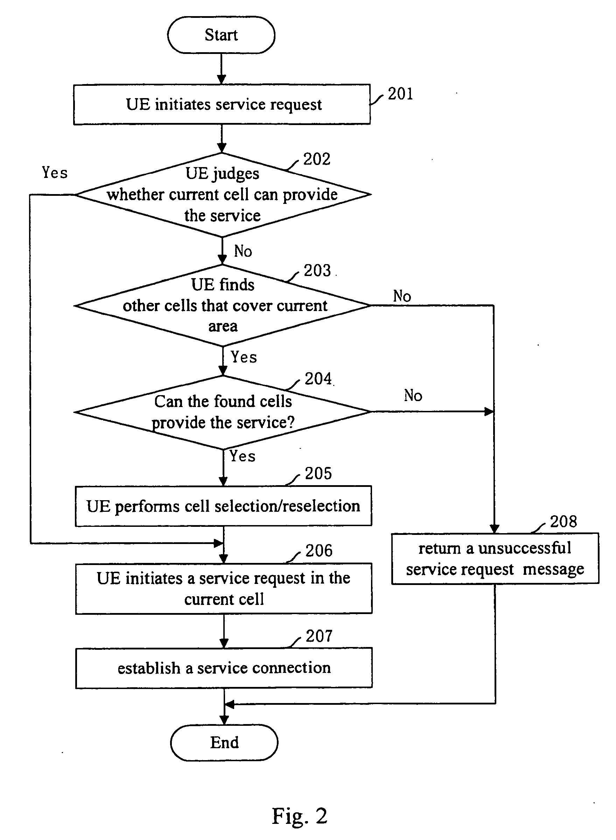

Figure 2 is a schematic diagram illustrating the service access procedure in accordance with the present invention. As shown in Figure 2, implementation of the service access procedure of the present invention comprises the following steps:
Step 201∼step 202: the subscriber notifies UE to send a service request to the network through a high-layer service interface, UE judges whether the current cell where it resides can provide the requested service, if yes, execute step 206; otherwise, execute step 203. The high-layer service interface can be the input interface. When selecting a cell, UE will interact with the cell, that is, UE provides its capability information to the cell where it resides and the cell where UE resides provides the cell capability information to UE. Therefore, UE can determine whether the current cell can provide the requested service. The said cell capability information refers to the information on what services the cell can provide.
Step 203: UE judges whether other cells that cover the current area are found, if yes, execute step 204; otherwise, execute step 208.
Step 204: UE judges whether the found cells can provide the requested service, if yes, execute step 205; otherwise, execute step 208.
Step 205: UE selects a cell, and it is still the cell with the signal of best quality that is selected. The selection this time, however, is from the cell list which comprises the cells that can provide the requested service.
Step 206∼step 207: UE sends a service request to the network in the current cell where it resides; after receiving the service request, the network establishes a service connection with UE and the procedure of establishing the service connection is over.
Step 208: after receiving unsuccessful service request response, UE notifies the subscriber through the high-layer service interface that the service connection is unsuccessful.

While in the idle state, UE will initiate a cell selection/reselection procedure selectively according to the service requested by the subscriber to reside in a proper cell before initiating the corresponding service request to the network.

In practical applications, it is possible to combine the mechanism provided by this invention, i.e. UE triggering cell selection/reselection according to the requested service, with the cell selection/reselection mechanism in the prior art so as to obtain an optimized cell selection/reselection mechanism. The said combination for optimized mechanism means using different cell selection method or combination of methods in accordance with different circumstances.

Before initiating a service request to the network, UE judges whether the current cell can provide the corresponding service, if the network cannot provide this service, UE will not send the service request to the current cell. As a result, the processing load of the cell where UE currently resides can be greatly reduced.

UE will not send a service request to the network before performing cell selection/reselection according to the triggering service and finding a cell that can provide the corresponding service, after that, UE will establish a service connection with the network. The above whole procedure is shielded from the subscriber, so the subscriber will feel no difference from initiating a service in the current cell. In this way, the subscriber does not have to be concerned with whether the current cell can provide the corresponding service while UE will search for a proper cell automatically, which brings great convenience to the subscriber.

To sum up, the above description is just a preferred embodiment of the present invention, not used to confine the protection scope of this invention.

## Claims

1. A method for establishing a service connection between a User Equipment, UE, and a network, said method comprising:
receiving (201) by a UE, a service request from a subscriber in a current cell where the UE resides;
determining and selecting (205) by the UE, a cell that covers the current area where the UE resides and that is able to provide the service requested by the subscriber before sending the service request to the network by determining whether the current cell is able to provide the service requested according to the cell capability information provided by the current cell; if yes, selecting the current cell; otherwise, selecting another cell that covers the current area and that is able to provide the service requested according to the cell capability information provided by the other cell;
initiating (206) by the UE, the service request to the network in the selected cell;
establishing (207) a service connection with the UE by the network.

2. The method according to Claim 1, wherein selecting another cell that covers the current area and is able to provide the service comprises:
searching (203) for, by the UE, other cells that cover the current area;
residing (205), by the.UE, in a found cell that is able to provide the service with the signal of best quality if determining (204) that the found cell is able to provide the service according to the cell capability information provided by the found cell.

## Patentansprüche

1. Verfahren zum Aufbauen einer Dienstverbindung zwischen einem Anwendergerät, UE, und einem Netz, wobei das Verfahren Folgendes umfasst:
Empfangen (201) durch ein UE einer Dienstanforderung von einem Teilnehmer in einer momentanen Zelle, in der sich das UE befindet;
Bestimmen und Auswählen (205) durch das UE einer Zelle, die den momentanen Bereich, in dem sich das UE befindet, abdeckt und die den von dem Teilnehmer angeforderten Dienst bereitstellen kann, bevor die Dienstanforderung zu dem Netz gesendet wird, indem in Übereinstimmung mit den Zellenfähigkeitsinformationen,
die durch die momentane Zelle bereitgestellt werden, bestimmt wird, ob die momentane Zelle den angeforderten Dienst bereitstellen kann; wenn ja, Auswählen der momentanen Zelle; andernfalls Auswählen einer weiteren Zelle, die den momentanen Bereich abdeckt und die den angeforderten Dienst bereitstellen kann, in Übereinstimmung mit den Zellenfähigkeitsinformationen, die durch die andere Zelle bereitgestellt werden;
Beginnen (206) durch das UE der Dienstanforderung zu dem Netz in der ausgewählten Zelle;
Aufbauen (207) einer Dienstverbindung mit dem UE durch das Netz.

2. Verfahren nach Anspruch 1, wobei das Auswählen einer weiteren Zelle, die den momentanen Bereich abdeckt und die den Dienst bereitstellen kann, Folgendes umfasst:
Suchen (203) durch das UE anderer Zellen, die den momentanen Bereich abdecken;
Aufhalten (205) des UE in einer gefundenen Zelle, die den Dienst mit der besten Signalqualität bereitstellen kann, falls in Übereinstimmung mit den Zellenfähigkeitsinformationen, die durch die gefundene Zelle bereitgestellt werden, bestimmt wird (204), dass die gefundene Zelle den Dienst bereitstellen kann.

## Revendications

1. Procédé d'établissement d'une connexion de service entre un Equipement Utilisateur, UE, et un réseau, ledit réseau comprenant :
la réception (201) par un UE, d'une requête de service provenant d'un abonné dans une cellule courante dans laquelle se trouve l'UE ;
la détermination et la sélection (205) par l'UE, d'une cellule qui couvre la zone courante dans laquelle se trouve l'UE et qui est capable de fournir le service requis par l'abonné avant l'envoi de la requête de service au réseau en déterminant si la cellule courante est ou non capable de fournir le service requis en fonction des informations de capabilité de cellule fournies par la cellule courante ; dans l'affirmative, la sélection de la cellule courante ; dans le cas contraire, la sélection d'une autre cellule qui couvre la zone courante et qui est capable de fournir le service requis en fonction des informations de capabilité de cellule fournies par l'autre cellule ;
le lancement (206), par l'UE, de la requête de service au réseau dans la cellule sélectionnée ;
l'établissement (207) d'une connexion de service avec l'UE par le réseau.

2. Procédé selon la revendication 1, dans lequel la sélection d'une autre cellule qui couvre la zone courante et qui est capable de fournir le service comprend :
la recherche (203), par l'UE, d'autres cellules qui couvrent la zone courante ;
le séjour (205), par l'UE, dans une cellule trouvée capable de fournir le service avec le signal de meilleure qualité s'il est déterminé (204) que la cellule trouvée est capable de fournir le service en fonction des informations de capabilité de cellule fournies par la cellule trouvée.
